# EUROPEAN PATENT APPLICATION

(11) **EP 3 624 040 A1**
(43) Date of publication of application: **18.03.2020**
(21) Application number: 18193915.8
(22) Date of filing: 12.09.2018
(51) Int. Cl.: G06Q 30/00, G06Q 30/02

(54) **FEEDBACK COLLECTION**

(71) Applicant: Helvar Oy Ab, 02150 Espoo (FI)
(72) Inventor: JUSLÉN, Henri, 02150 ESPOO (FI)
(74) Representative: Berggren Oy, Helsinki & Oulu

(57) **Abstract**

According to an example embodiment, a control and feedback arrangement is provided, the arrangement comprising a user input device for receiving a user action that at least in part control operation of a back-end system; and the back-end system operating at least in part in control of the user input device, wherein the user input device provides two or more different ways for receiving the user action that causes the back-end system to carry out the same function and wherein each of the two or more different ways for receiving the user action cause providing respective different feedback indication to the back-end system.

## Description

### TECHNICAL FIELD

The example and non-limiting embodiments of the present invention relate to an arrangement for collecting user feedback via a user operating an user interface of a device or system such as a luminaire a smart lock, a point of sale (POS) terminal, a lighting system, a building automation system, etc. wherein the user feedback may directly or indirectly relate, for example, to the user-operated device or system as such, to a location of the user when operating the device or system, to the mood or state of mind of the user, etc.

### BACKGROUND

User feedback or customer feedback plays an important role for monitoring and improving quality provided by a service rendered to the user or via operation of a device or a system operated by a user. The user feedback or customer feedback may be collected such that it is aimed to reflect the user's level of satisfaction to a specific service or event rendered to him/her. Another class of user feedback or customer feedback may aim at reflecting the user's level of satisfaction or mood with respect to a visit to a certain location or service provider, such as retail store.

Known mechanisms of acquiring the feedback from a user/customer include direct interviews or questionnaires that may be provided via a technical means, such as via the Internet or by a SMS service. Another class of known mechanisms in this regard involve specific devices that may be arranged close to a location where the user/customer exits the location of a service. A specific example of the latter is a device that includes several buttons that each are assigned to a specific user satisfaction level, where the user/customer may push the button of his/her choice to provide the feedback for later analysis. However, while providing simple and readily available tools for acquiring additional information from the user, these mechanisms are unreliable since due to additional effort required from the user, only part of the users take the effort of actually providing their input. Moreover, field experiments have indicated that the user input obtained via such mechanisms tends to concentrate on the extremes (e.g. extremely happy or extremely unhappy users) while the 'middle-ground' tends to leave uncovered, thereby resulting in possibly biased user feedback.

On the other hand, in many scenarios where the user or customer feedback is collectable immediately after or even before rendering a service to the user or the user operating the device or system, such feedback may not only provide statistical information about the user satisfaction for non-technical purposes but it may also serve as information that may be valuable additional input for controlling a device or a system operated in the location of the user - either as control information that affects the instantaneous operation of the device or the system or as data that may be later on applied in optimization of operation of the underlying technical process carried out by the device or the system.

### SUMMARY

It is an object of the present invention to provide a technique that enables convenient way for a user to provide feedback, thereby both increasing the likelihood of receiving the feedback and improving reliability of the received feedback.

According to an example embodiment, a control and feedback arrangement is provided, the arrangement comprising a user input device for receiving a user action that at least in part control operation of a back-end system; and the back-end system operating at least in part in control of the user input device, wherein the user input device provides two or more different ways for receiving the user action that causes the back-end system to carry out the same function and wherein each of the two or more different ways for receiving the user action cause providing respective different feedback indication to the back-end system.

### BRIEF DESCRIPTION OF FIGURES

The embodiments of the invention are illustrated by way of example, and not by way of limitation, in the figures of the accompanying drawings, where
Figure 1 illustrates a control and feedback arrangement according to an example;
Figure 2A illustrates a control and feedback arrangement according to an example;
Figure 2B illustrates a control and feedback arrangement according to an example; and
Figure 3 illustrates a control and feedback arrangement according to an example.

### DESCRIPTION OF SOME EMBODIMENTS

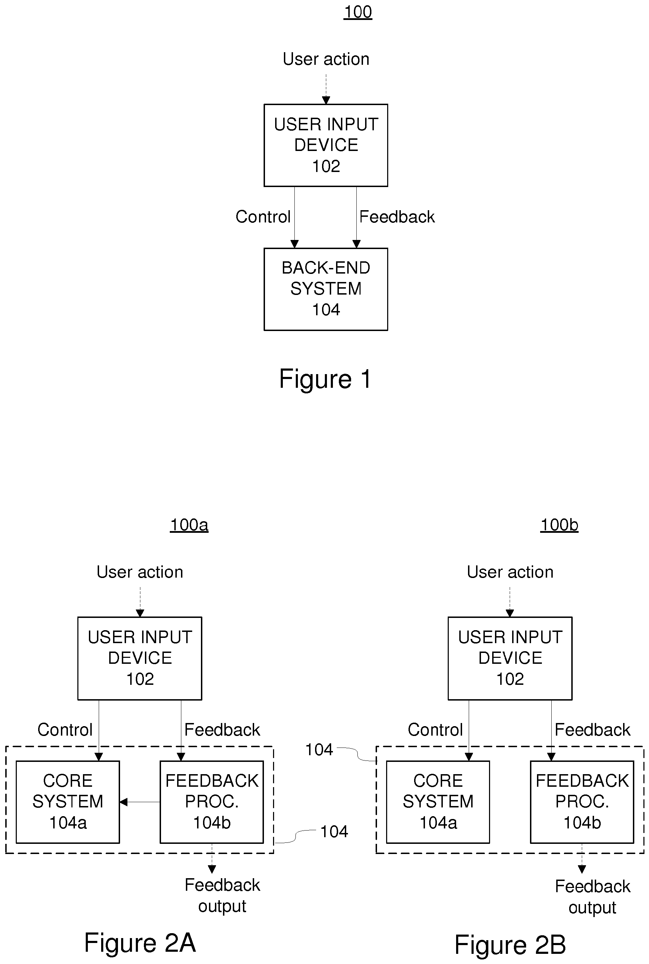

Figure 1 illustrates a block diagram of some components of a control and feedback arrangement 100 according to an example. The arrangement 100 comprises a user input device 102 arranged to receive a user action that at least in part controls operation of a back-end system 104 and conveys user feedback to the back-end system. The arrangement 100 further comprises the back-end system operating at least in part under control of the user input device 102. In particular, the user input device 102 enables two or more different ways for a user to enter a user action that result in the back-end system 104 carrying out the same function, whereas each of the two or more ways of entering the user action results in a respective different feedback indication to be provided to the back-end system 104.

In other words, the user input device 102 is provided with two or more different ways of receiving the user action that results in the back-end system 104 carrying out the same function regardless of the manner of receiving the user action but that results in the back-end system 102 receiving a respective different feedback indication in dependence of the manner of receiving the user action. In the following, this aspect of the user input device 102 is predominantly described via references to the user entering a user action, which directly implies the user input device 102 receiving the respective user action.

Throughout this disclosure, terms such as feedback, feedback indication and feedback signal are applied to refer to an aspect arising from the user-selected way of entering the user action via the user input device 102. This aspect may be, alternatively, referred to, for example, as valuation (valuation indication, valuation signal) or as evaluation (evaluation indication, evaluation signal).

In the framework of the arrangement 100, the user input device 102 may be arranged to convert a user action into a control signal and into a feedback signal and to provide the control signal and the feedback signal to the back- end system 104 for processing therein. In particular, this may be provided such that the user input device 102 is arranged to provide a selected one of two or more feedback signals in dependence of the user-selected way of entering the user action, while the user input device 120 provides the same or similar control signal independently of the way of the user entering the user action. In other words, the control signal may be the same or similar regardless of the user-selected way of entering the user action, whereas user-selection with respect to the way of entering the user action serves to select one of the two or more feedback signals accordingly. Upon reception of the control signal the back-end system 104 carries out a predefined function, e.g. changes or adjusts at least one aspect of its operation accordingly and stores the feedback information received in the feedback signal, whereas the feedback signal received at the back-end system 104 may further directly and/or indirectly result in a change or adjustment in operation of the back-end system 104.

In a first example embodiment, the user input device 102 comprises two or more separate user-operable input mechanisms that each enable entering a user action that results in the back-end system 104 carrying out the same function, where each of the user-operable input mechanisms has a respective different feedback associated therewith. In the framework of the arrangement 100 this may be provided such that each of the two or more user-operable input mechanisms has a respective one of two or more different predefined feedback signals associated therewith. The user action entered using a given one of the two or more user-operable input mechanisms results in the user input device 102 selecting the feedback signal associated with the given one of the user-operable input mechanisms and providing the selected feedback signal to the back-end system 104. Moreover, the user action entered using any of the two or more user-operable input mechanisms results in the user input device 102 providing the same or similar control signal to the back-end system 104.

As an example, each of the two or more user-operable input mechanisms according to the first example embodiment may comprise respective user-operable switches that, when operated by a user, cause the back-end system to carry out the same function. In general, such a function may involve changing or adjusting at least one aspect of operation of the back-end system 104, e.g. switching the back-end system 104, a component of the back-end system 104 or a peripheral device coupled to the backend system 104 on or off. Such user-operable switches may be provided, for example, using any suitable electronic or electro-mechanical switches known in the art. As non-limiting examples, the back-end system 104 coupled to the user input device 102 according to the first example embodiment may comprise a lighting system, an air conditioning system, a heating system, a building automation system and/or any sub-system thereof, etc.

In a second example embodiment, the user input device 102 comprises an active area for receiving a user action that results in the back-end system 104 carrying out the same function regardless of a position of the user action within the active area, whereas feedback indication resulting from the user action received via the user action is dependent on a position of the user action within the active area. In the framework of the arrangement 100 this may be provided such that the user input device 102 has two or more different predefined feedback signals associated therewith, where each of the two or more feedback signals may be associated with a respective position within the active area, with a respective set of positions or with a respective sub-area of the active area. The user input device 102 is arranged, in response to detecting a user action on the active area, to identify a position of the user action on the active area, to select one of the two or more predefined feedback signals in dependence of the identified position and to provide the selected feedback signal to the back-end system 104. Moreover, the user action entered at any position of the active area results in the user input device 102 providing the same or similar control signal to the back-end system 104. In a non-limiting example in this regard, the active area of the input device may be divided into two or more sub-areas that each have a respective one of the feedback signal associated therewith, and the user interface device 102 responds to a user action detected on the active area by identifying the position of the detected user action, identifying the sub-area within which the identified position is located, selecting the feedback signal associated with the identified sub-area, and providing the selected feedback signal to the back-end system 104 (together with the control signal selected independently of the identified position of the detected user action).

In an example in the framework of the second example embodiment, the active area may comprise a touch-sensitive surface of a touch-sensitive element, such as a touch panel, a touchpad, a touch-sensitive display (e.g. a touchscreen), etc. provided via usage of a suitable technique known in the art. In another example, the active area may comprise a receiver area of a near-field communication (NFC) device (e.g. a NFC reader) provided using a suitable NFC technique known in the art.

As in the case of the first example embodiment, also in the framework of the second example embodiment, non-limiting examples of the back-end system 104 coupled to the user input device 102 include a lighting system, an air conditioning system, a heating system, a building automation system and/or any sub-system thereof, etc. In such scenarios, the active area of the user input device 102 may comprise a touch sensitive surface, e.g. a touchscreen, via which the user is able to cause the back-end system 104 to carry out the predefined function that may involve controlling at least one aspect of operation of the back-end system 104.

In scenarios where the second example embodiment relies on the user input device 102 provided with the NFC device, the user action may be entered using a second NFC device operated by a user (e.g. a smartcard or a mobile device serving as a NFC tag or a NFC card). Such NFC arrangements are deployed, for example, in contactless payment, electronic ticketing, access control, identity verification, etc. and hence in the second example embodiment the back-end system 104 may comprise, for example, an access control device such as a smart lock, a point of sales device such as a contactless payment terminal, a travel card reader device of public transport system, a membership/loyalty card reader device in a retail store or a service provider of other type, etc.

In the first and second example embodiments described above (and variations thereof), the user input device 102 enables the user both to cause the back-end system 104 to carry out the predefined function (e.g. a change or adjustment of at least one aspect of operation of the back-end system 104) and to provide feedback via a single user action. In other words, provision of feedback is coupled to a user action that has a primary purpose of controlling operation of the back-end system, thereby providing technical means that enable obtaining feedback from a user without additional effort from him/her.

As non-limiting examples, the user feedback obtainable via usage of the control and feedback arrangement 100 described in the foregoing and in the following may directly or indirectly relate, for example, to the operation of the back-end system 104, to a location where the user input device 102 and/or the back-end system 104 are operated, to a service provided at a location where the user input device 102 and/or the back-end system 104 are operated, to the mood or the state of mind of the user, etc. In further examples, the feedback obtainable via the control and feedback arrangement 100 may be unrelated to operation of the back-end system 104. In such scenarios the user feedback may relate, for example, to a mood or the state of mind of the user in general without a direct link to the operation of the back-end system 104. The feedback obtained via the arrangement 100 may be applied, possibly together with information that is descriptive of environmental conditions (such as ambient temperature, lighting level, CO₂ level, etc.) at the location of the user input device 102 and/or the back-end system 104, to adjust or optimize operation of other systems or devices operated at same location. However, regardless of the exact characteristic and/or nature of the feedback obtained via usage of the control and feedback arrangement 100, such feedback serves as additional input that may be applied for directly or indirectly adjusting and/or optimizing operation of the back-end system 104 and/or another system in view of the characteristics of the feedback and in view of its relationship with operation of the back-end system 104, possibly also in consideration of the information that is descriptive of environmental conditions at the location of the user input device 102 and/or the back-end system 104. As examples in this regard, such adjustment or optimization of operation (of the back-end system 104 and/or another system) may be provided, for example, in an automated manner (e.g. via unsupervised machine learning) or via at least partial involvement of a human operator (e.g. semi-supervised machine learning, supervised machine learning)

A user interface of the user input device 102 is preferably provided with one or more symbols that serve as respective indications to the user with respect to characteristics of the feedback signals provided from the user input device 102 in response to a user action entered thereto. For example in the first example embodiment, each of the user-operable input mechanisms included therein may be provided with a respective symbol that represents the characteristic of feedback resulting from user operating the respective input mechanism. In the second example embodiment, each of the two or more positions or sub-areas of the active area may be provided with a respective symbol that represents the characteristic of feedback resulting from a user action entered via the respective position or sub-area of the active area. As a particular example in the framework of the second example embodiment, in a scenario where the active area is provided as a touchscreen, the symbols may be provided via an image displayed on the touchscreen. Throughout the first and second example embodiments (and variations thereof), the symbols may be provided as respective textual descriptions, numbers, emoticon-like pictures, etc.

The control signal described in the foregoing (and in the following) serves to convey information that directly affects operation of the back-end system 104, whereas the feedback signal may at least indirectly affect operation of the back-end system 104 or it may be not be directly relevant for the operation of the back-end system 104, for example, in one of the following ways:
- A feedback signal may serve to convey feedback data that may be indirectly applied in adjusting or optimizing operation of the back-end system 104, for example after having collected the feedback data over a predefined time period. Figure 2A illustrates a block diagram of some components of a control and feedback arrangement 100a that serves as a non-limiting example in this regard. In the arrangement 100a the back-end system 104 comprises the core system 104a that receives the control signal and a feedback processing system 104b that receives the feedback signal. The feedback processing system 104b processes feedback information received in the feedback signal together with feedback information received via the feedback signals over the predefined time period to derive a further control signal for provision to the core system 104a, whereas the core system 104a changes or adjusts its operation in accordance with the control signal and the further control signal. The feedback processing system 104b may further provide a feedback output that comprises feedback information received at the feedback processing system 104b in the feedback signals and/or information derived therefrom. The adjustment or optimization process in the feedback processing system 104b may be carried out automatically by the feedback processing system 104b e.g. via operation of a predefined adjustment algorithm or the adjustment or optimization process may include involvement of a human operator that makes use of the feedback information collected from the feedback signals received over the predefined time period.
- A feedback signal may not be directly related to operation of the back- end system 104 but it may be nevertheless collected via the back-end system 104 and stored therein (e.g. in a memory device) for subsequent analysis. Figure 2B illustrates a block diagram of some components of a control and feedback arrangement 100b that serves as a non-limiting example in this regard. In the arrangement 100b the back-end system 104 comprises the core system 104a that receives the control signal and a feedback processing system 104b that receives the feedback signal. The core system 104a changes or adjusts its operation in accordance with the control signal, whereas the feedback processing system 104b processes and/or stores feedback information received in the feedback signal together with feedback information received via the feedback signals over the predefined time period and provides a feedback output that comprises feedback information received at the feedback processing system 104b in the feedback signals and/or information derived therefrom. Hence, the information stored in the feedback processing system 104b may be provided as the feedback output therefrom for analysis in another system or device or by a human operator, or the information stored in the feedback processing system 104b may be analyzed therein and the results of the analysis may be provided as the feedback output from the feedback processing system 104b.

In the exemplifying arrangements 100, 100a and 100b, the back-end system 104 or the feedback processing system 104b may receive further input that may be stored therein together with the feedback information received in the feedback signals (not illustrated in Figures 1, 2A and 2B). An example of such further input comprises one or more sensor signals that are descriptive of respective environmental parameters at the site of the arrangement 100, 100a, 100b. Non-limiting examples of applicable sensor signals include a signal from a temperature sensor, a signal from a light sensor, a signal from a CO₂ sensor, etc. Additionally or alternatively, the back-end system 104 or the feedback processing system 104b may store the feedback information received in the feedback signals together with timing information that indicates the time of receiving the respective piece of feedback information. In an example, the feedback information received in the feedback signals over time is arranged in data records, where each data record includes the feedback information received in the respective feedback signal together with one or more of the following: the time of receiving the respective feedback information, the environmental parameter values indicated in the one or more sensor signals at the time of receiving the respective feedback information. The timing information and/or the information regarding the environmental parameters may subsequently enable improved analysis of the feedback information received in the feedback signals.

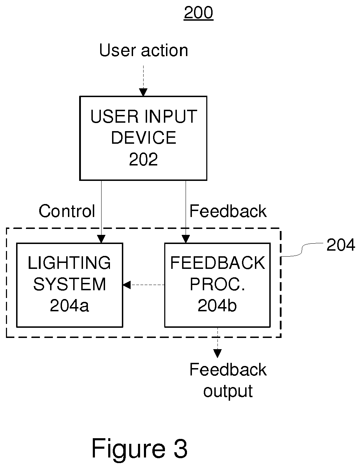

Figure 3 illustrates a block diagram of some components of a lighting control arrangement 200 according to an example in the framework of the arrangement 100. The lighting control arrangement 200 comprises a user input device 202 for converting a user action into the control signal and the feedback signal and a lighting arrangement 204 for illuminating an area, a space, a building, etc. The user input device 202 may be installed, for example, in a wall or another fixed structure in or close to the area, the space, the building, etc. the lighting arrangement 204 serves to illuminate.

The user input device 202 comprises a touch-sensitive display arranged to display two or more symbols that each cover a sub-area of the display that has a respective one of the two or more feedback signals associated therewith. The user input device 202 is arranged to provide the same or similar control signal that selectively turns the lighting system 202 on or off in response to a user action (e.g. a touch event) detected in any of the sub-areas of the touch-sensitive display. The user input device 204 is further arranged to identify a position of a detected user action on the touch-sensitive display, identify the sub-area of the touch-sensitive display within which the identified position is located, select the feedback signal associated with the identified sub-area, and provide the selected feedback signal to the back-end system 204.

The lighting arrangement 204 comprises a lighting system 204a for providing illumination at least in part under control of the control signal received from the user input device 202 and a feedback processing system 204b for storing the feedback information received in the feedback signal(s) from the user input device 202. The control signal received at the lighting system 204a may result, for example, turning the lighting system 204 or part thereof off in case the it is currently on and result in turning the lighting system 204 or part thereof on in case it is currently off. The feedback processing system 204b may be arranged to apply feedback information received in the feedback signals over a predefined time period to derive a further control signal on basis of the feedback information received over the predefined time period. Alternatively or additionally, the feedback processing system 204b may be arranged to provide a feedback output that comprises feedback information received at the feedback processing system 104b in feedback signals over the time period and/or information derived therefrom via an analysis carried out by the feedback processing system 104b.

In the present disclosure, although functions have been described with reference to certain features, those functions may be performable by other features whether described or not. Although features have been described with reference to certain embodiments, those features may also be present in other embodiments whether described or not.

## Claims

1. A control and feedback arrangement comprising:
a user input device (102, 202) for receiving a user action that at least in part control operation of a back-end system (104, 204); and
the back-end system (104, 204) operating at least in part in control of the user input device (102, 202),
wherein the user input device (102, 202) provides two or more different ways for receiving the user action that causes the back-end system (104, 204) to carry out the same function and wherein each of the two or more different ways for receiving the user action cause providing respective different feedback indication to the back-end system (104, 204).

2. An arrangement according to claim 1, wherein the user input device (102, 202) is arranged to, in response to a user action thereon,
provide a control signal to the back-end system (104, 204), wherein the control signal is the same or similar regardless of the way of receiving the user action, and
provide a feedback signal to the back-end system (104, 204), wherein the feedback signal is selected from two or more predefined feedback signals in dependence of the way of receiving the user action.

3. An arrangement according to claim 1, wherein the user input device (104, 204) comprises two or more separate user-operable input mechanisms that each enable receiving the user action that causes the back-end system (104, 204) to carry out the same function, and wherein each of the two or more separate user-operable input mechanisms is associated to the respective different feedback indication.

4. An arrangement according to claim 3, wherein
the user input device (102, 202) is arranged to provide the same or similar control signal in response to receiving the user action via any of two or more separate user-operable input mechanisms, and
the user input device (102, 202) has two or more predefined feedback signals, each associated with a respective one of the two or more user-operable input mechanisms and the user input device (102, 202) is arranged to
select, in response to receiving the user action via a given user-operable input mechanism, the feedback signal associated with the given user-operable input mechanism, and
provide the selected feedback signal to the back-end system (104, 204).

5. An arrangement according to claim 3 or 4, wherein each of the two or more separate user-operable input mechanisms is provided as a respective electrical or electro-mechanical switch.

6. An arrangement according to claim 1, wherein the user input device (104, 204) comprises an active area for receiving a user action, wherein the user action received via any position of the active area causes the back-end system (104, 204) to carry out the same function, and
the feedback indication is dependent on the position of the user action within the active area.

7. An arrangement according to claim 6, wherein
the user input device (102, 202) is arranged to provide the same or similar control signal in response to receiving the user action via any position of the active area, and
the user input device (102, 202) has two or more predefined feedback signals, each associated with a respective sub-area of the active area and the user input device (102, 202) is arranged to
identify, in response to detecting a user action via the active area, a position of the user action within the active area,
identify the sub-area within which the identified position is located, select the feedback signal associated with the identified sub-area, and
provide the selected feedback signal to the back-end system (104, 204).

8. An arrangement according to claim 6 or 7, wherein the active area comprises a touch-sensitive surface of a touch sensitive element.

9. An arrangement according to claim 6 or 7, wherein the active area comprises a receiver area of a near-field communication, NFC, device.

10. An arrangement according to any of claims 1 to 9, wherein the back- end system (104, 204) comprises:
a core system (104a, 204a) arranged to carry out a predefined function in response to receiving the control signal; and
a feedback processing system (104b, 204b) arranged to store feedback information received in the feedback signal in a memory device.

11. An arrangement according to claim 10, wherein the feedback processing system (104b, 204b) is arranged to store feedback information received in a plurality of feedback signals during a time period.

12. An arrangement according to claim 11, wherein the feedback processing system (104b, 204b) is arranged to provide the stored feedback information as feedback output to a further entity for analysis of the feedback information therein.

13. An arrangement according to claim 11 or 12, wherein the feedback processing system (104b, 204b) is arranged to analyze the feedback information received in said plurality of feedback signals during a time period and to carry out one or more of the following:
derive, on basis of the analysis, a further control signal for controlling operation of the core system (104a, 204a) and provide the control signal to the core system (104a, 204a),
provide a result of the analysis as feedback output to another entity for further processing therein.

14. An arrangement according to any of claims 1 to 13, wherein said function comprises switching at least part of the back-end system (104, 204) on or off.

15. An arrangement according to any of claims 1 to 14, wherein the back- end system (104, 204) comprises one of a lighting system (204), an air-conditioning system, a building automation system or a sub-system thereof operating at least in part in control of the user input device (102, 202).
